# EUROPEAN PATENT APPLICATION

(11) **EP 2 963 889 A1**
(43) Date of publication of application: **06.01.2016**
(21) Application number: 15174693.0
(22) Date of filing: 30.06.2015
(51) Int. Cl.: H04L 29/06

(54) **METHOD AND APPARATUS FOR SHARING DATA OF ELECTRONIC DEVICE**

(30) Priority: 01.07.2014 KR 20140081855
(71) Applicant: Samsung Electronics Co., Ltd, Gyeonggi-do 443-742 (KR)
(72) Inventor: KIM, Jung-Hun, Gyeonggi-do (KR); KIM, Youn-Lea, Seoul (KR); HA, Su-Hyung, Gyeonggi-do (KR)
(74) Representative: Jenkins, Richard Gavin

(57) **Abstract**

A method for communciating data in an electronic device includes receiving data from the second electronic device through a first network connection by a first electronic de vice, determining whether the capability of the first network connection meets a predetermin ed capability threshold, and, in response to the determination, switching the first network co nnection to a second network connection that meets the predetermined capability threshold , and receiving the data of the second electronic device from the second electronic device. As erver includes a transceiver configured to receive information regarding at least one availabl e alternative network from the second electronic device, a processor configured to determine a second network connection that meets the predetermined capability threshold among the a t least one available alternative network, and indicate the determined second network to each of the first electronic device and the second electronic device.

## Description

### TECHNICAL FIELD

The present disclosure relates generally to a method and an apparatus for sharing data between electronic devices.

### BACKGROUND

As multimedia services such as digital TV, Internet Protocol Television (IPTV), and Video On Demand (VOD) have been diversified, display technologies for large size and high definition screens have been developed.

Further, among user devices that can freely access and reproduce multimedia contents, such as digitalized video, graphic, and audio data, a portable electronic device has been increasingly used.

In general, since a screen size of a display of the portable electronic device is smaller than a screen size of a monitor of a digital TV or computer, a user may desire to connect the portable electronic device to the digital TV or computer to output a screen (for example, a game, a webpage image, or a video), which is displayed on the portable electronic device, on the monitor of the digital TV or computer larger than the screen of the portable electronic device.

In the related art, the portable electronic device and the display device may be connected to each other through a wired cable (Universal Serial Bus (USB) or a High Definition Multimedia Interface (HDMI)) or a wireless (WiFi, cellular communication (for example, 3G/LTE), Bluetooth) interface, and thus interwork with each other in various network environments.

### SUMMARY

Various embodiments of the present disclosure may provide a method and an apparatus for sharing data of an electronic device based on user convenience.

Various embodiments of the present disclosure may provide a method and an apparatus for sharing a screen based on network connection history information for screen sharing.

According to various embodiments of the present disclosure, a method of sharing a screen of an electronic device may include: receiving data of a second electronic device from the second electronic device through a first network connection by a first electronic device; determining whether the capability of the first network connection meets a predetermined threshold; and, in response to the determination, switching the first network connection to a second network connection that meets the predetermined threshold and receiving the data of the second electronic device from the second electronic device.

According to various embodiments of the present disclosure, an operation method of a server for sharing a screen may include: when the capability of a first network connection does not meet a predetermined threshold during a screen sharing service between a first electronic device and a second electronic device through a first network connection, receiving first network resource information from the first electronic device; receiving second network resource information from the second electronic device; determining a second network connection that meets the predetermined threshold based on the available first network resource information and the available second network resource information; and providing network connection information corresponding to the determined second network connection to each of the first electronic device and the second electronic device.

According to various embodiments of the present disclosure, a method of sharing a screen of an electronic device may include: transmitting an output image of a second electronic device to a first electronic device through a first network connection, and, in response to the determination, switching the first network connection to a second network connection which meets the predetermined threshold and transmitting data of the second electronic device to the first electronic device.

According to various embodiments of the present disclosure, an electronic device may include a processor for receiving data of a second electronic device from the second electronic device through a first network connection, determining whether the capability of the first network connection meets a predetermined threshold, and, in response to the determination, switching the first network connection to a second network connection that meets the predetermined threshold and receiving the data of the second electronic device from the second electronic device.

According to various embodiments of the present disclosure, an apparatus of a server may include a processor for receiving first network resource information from a first electronic device when the capability of a first network connection does not meet a predetermined threshold during a screen sharing service between the first electronic device and a second electronic device through the first network connection, receiving available second network resource information from the second electronic device, determining a second network connection that meets the predetermined threshold based on the available first network resource information and the available second network resource information, and making a control to provide network connection information corresponding to the determined second network connection to each of the first electronic device and the second electronic device.

According to various embodiments of the present disclosure, a second electronic device may include a processor for transmitting data of the second electronic device to a first electronic device through a first network connection; and, when the capability of the first network connection does not meet a predetermined threshold, switching the first network connection to a second network connection that meets the predetermined threshold and transmitting the data of the second electronic device to the first electronic device.

A server includes a transceiver configured to receive first network resource information from a first electronic device when the capability of a first network connection does not meet a predetermined capability threshold during a screen sharing service between the first electronic device and a second electronic device through the first network connection, and
receive information regarding at least one available alternative network from the second electronic device, a processor configured to determine a second network connection that meets the predetermined capability threshold among the at least one available alternative network, and indicate the determined second network to each of the first electronic device and the second electronic device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device maybe implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts: The above and other objects, features and advantages of the present disclosure will be more apparent from the following detailed description in conjunction with the accompanying drawings, in which:
FIG. 1 illustrates an example of a configuration of a wireless sharing system according to various embodiments of the present disclosure;
FIG. 2 illustrates a network environment including an electronic device according to various embodiments of the present disclosure;
FIG. 3 illustrates a scenario of a network connection between a desktop computer and a portable electronic device according to various embodiments of the present disclosure;
FIG. 4 illustrates a scenario of a network connection between a notebook and a portable electronic device according to various embodiments of the present disclosure;
FIG. 5 is a signal flow diagram for sharing a screen between two electronic devices according to various embodiments of the present disclosure;
FIG. 6 illustrates an example of a network channel change for sharing a screen between two electronic devices according to various embodiments of the present disclosure;
FIG. 7 is a flowchart illustrating an operation of a first electronic device that makes a request for a screen sharing service according to various embodiments of the present disclosure;
FIG. 8 is a flowchart illustrating an operation of a server for supporting screen sharing between two electronic devices according to various embodiments of the present disclosure;
FIG. 9 is a flowchart illustrating an operation of a second electronic device that receives a request for a screen sharing service according to various embodiments of the present disclosure; and
FIG. 10 is a block diagram of an electronic device according to various embodiments of the present disclosure.

### DETAILED DESCRIPTION

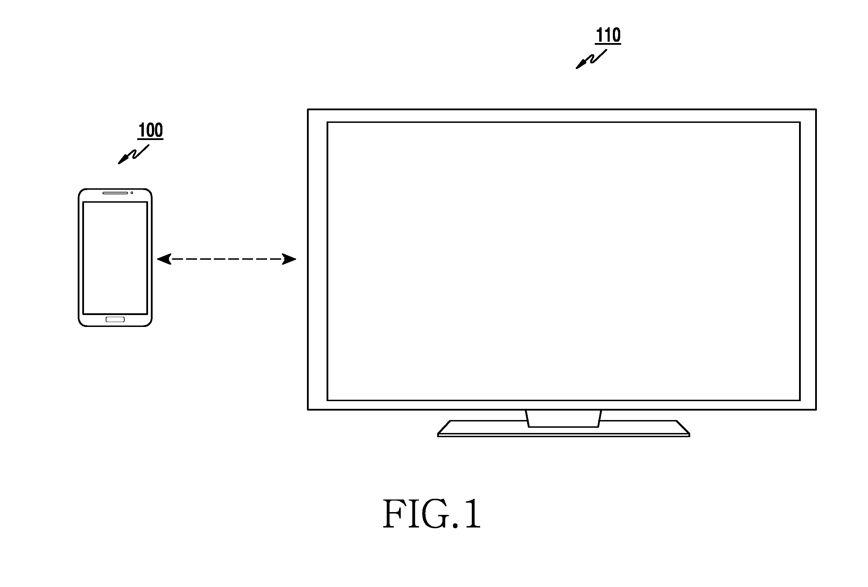

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. Hereinafter, the present disclosure will be described with reference to the accompanying drawings. The present disclosure may have various modifications and embodiments and thus will be described in detail with reference to specific embodiments illustrated in the drawings. However, it should be understood that there is no intent to limit the present disclosure to the particular forms disclosed herein; rather, the present disclosure should be construed to cover all modifications, equivalents, and/or alternatives falling within the spirit and scope of the disclosure. In the description of the drawings, identical or similar reference numerals are used to designate identical or similar elements.

In the present disclosure, the expression "include" or "may include" refers to existence of a corresponding function, operation, or element, and does not limit one or more additional functions, operations, or elements. In the present disclosure, the terms such as "include" and/or "have" may be construed to denote a certain characteristic, number, step, operation, constituent element, element or a combination thereof, but may not be construed to exclude the existence of or a possibility of addition of one or more other characteristics, numbers, steps, operations, constituent elements, elements or combinations thereof.

In the present disclosure, the expression "or" includes any or all combinations of words enumerated together. For example, the expression "A or B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices although both of them are user devices. For example, a first element could be termed a second element, and similarly, a second element could be also termed a first element without departing from the scope of the present disclosure.

In the case where an element is referred to as being "connected" or "accessed" to other elements, it should be understood that not only the element is directly connected or accessed to the other elements, but also another element may exist between them. Meanwhile, in the case where an element is referred to as being "directly connected to" or "directly accessing" other elements, it should be understood that there is no element therebetween.

The terms used in the present disclosure are only used to describe specific embodiments, and are not intended to limit the present disclosure. As used herein, the singular forms are intended to include the plural forms as well, unless the context clearly indicates otherwise.

Unless defined otherwise, all terms used herein, including technical and scientific terms, have the same meaning as commonly understood by those of skill in the art to which the present disclosure pertains. Such terms as those defined in a generally used dictionary are to be interpreted to have the meaning equal to the contextual meaning in the relevant field of art, and are not to be interpreted to have ideal or excessively formal meaning unless clearly defined in the present disclosure.

An electronic apparatus according to the present disclosure may be an apparatus having a communication function. For example, the electronic device may include at least one of a smartphone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), an MP3 player, a mobile medical appliance, a camera, and a wearable device (e.g. a Head-Mounted-Device (HMD) such as electronic glasses, electronic clothes, an electronic bracelet, an electronic necklace, an electronic appcessory, electronic tattoos, or a smartwatch).

According to some embodiments, the electronic device may be a smart home appliance with a communication function. The smart home appliance as an example of the electronic device may include at least one of, for example, a television, a Digital Video Disk (DVD) player, an audio, a refrigerator, an air conditioner, a vacuum cleaner, an oven, a microwave oven, a washing machine, an air cleaner, a set-top box, a TV box (e.g., Samsung HomeSyncTM, Apple TVTM, or Google TVTM), a game console, an electronic dictionary, an electronic key, a camcorder, and an electronic picture frame.

According to some embodiments, the electronic device may include at least one of various types of medical devices (for example, Magnetic Resonance Angiography (MRA), Magnetic Resonance Imaging (MRI), Computed Tomography (CT), a scanning machine, ultrasonic wave device and the like), a navigation device, a Global Positioning System (GPS) receiver, an Event Data Recorder (EDR), a Flight Data Recorder (FDR), a car infotainment device, ship electronic equipment (for example, navigation equipment for a ship, a gyro compass and the like), avionics, a security device, and an industrial or home robot.

According to another embodiment, the electronic devices may include at least one of furniture or a part of a building/structure having a communication function, electronic boards, electronic signature receiving devices, projectors, or various measuring equipment (e.g., equipment for a water supply, an electricity, gases or radio waves). The entity according to the present disclosure may be a combination of one or more of the above-mentioned various devices. It is obvious to those skilled in the art that the electronic device according to the present disclosure is not limited to the aforementioned devices.

Hereinafter, an electronic device according to various embodiments of the present disclosure will be described with reference to the accompanying drawings. In various embodiments, the term "user" may indicate a person using an electronic device or a device (e.g. an artificial intelligence electronic device) using an electronic device.

A connection between two devices used in various embodiments of the present disclosure may be made through a technique such as mirroring, and the term "mirroring" may be interchangeable with the term "display mirroring" or "screen mirroring". The mirroring may mean that a screen of a second electronic device is provided to a first electronic device and thus the screen of the second electronic device is shared. However, various embodiments of the present disclosure are not limited to the sharing of the screen of the second electronic device, and a screen of the first electronic device may be provided to the second electronic device and thus the screen of the first electronic device may be shared. Hereinafter, the size of a display mounted to the first electronic device may be larger than, equal to, or smaller than the size of a display mounted to the second electronic device.

Various embodiments of the present disclosure will describe a method and an apparatus for sharing a screen, which identify a network connection capability for screen sharing and switch the network connection to a network connection having the network connection capability that meets a threshold.

Before a connection is established between two electronic devices, a specific network connection among a plurality of network connections should be configured by a user. For example, when the user attempts the connection between the two electronic devices by using short-range wireless communication (for example, WiFi or Bluetooth), the user should directly activate short-range wireless communication functions of the two electronic devices.

According to various embodiments, when one of a plurality of network connections is automatically determined by a predetermined process, and a connection between two electronic devices is made, the one determined network connection may be continuously maintained until the connection ends.

However, it inconveniences the user to select one of the plurality of network connections. Further, since the user cannot determine whether the network connection selected by the user guarantees a speed between the two electronic devices, it is difficult to guarantee a stable connection speed.

Similarly, although one of the plurality of network connections is automatically determined by the predefined process and a stable connection between the two electronic devices is made, it is difficult to guarantee the stable connection speed due to a time variable network environment.

FIG. 1 illustrates an example of a configuration of a wireless sharing system according to various embodiments of the present disclosure.

Referring to FIG. 1, a first electronic device 110 (for example, a computer monitor or a digital TV) can be connected to a second electronic device 100 (for example, a portable electronic device such as a smart phone) which is smaller than the first electronic device 110 through one of various network connections, and methods for the connection can include, for example, a mirroring service.

The mirroring technique corresponds to a technique that, between two electronic devices having an image display function, one electronic device (for example, the second electronic device 100) transmits an image currently displayed on a screen to the other electronic device (for example, the first electronic device 110). For example, through the mirroring technique, the image displayed in the second electronic device 100 such as a mobile phone or a tablet PC is transmitted to the first electronic device 110 such as a TV or a PC and the first electronic device 110 displays the screen of the second electronic device 100. The mirroring technique can be used when a user desires to output a game or a webpage image, which is displayed in a terminal having a relatively small screen such as a portable electronic device, to a larger screen. Accordingly, the user can view data moved to the larger screen conveniently through the larger screen and the usability of the portable electronic device can be further expanded.

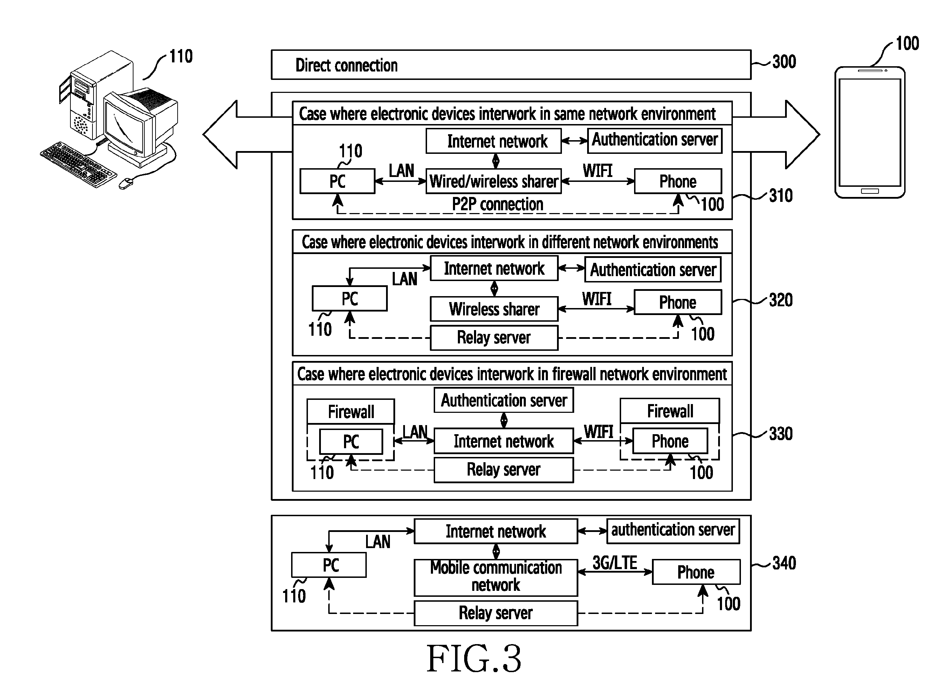

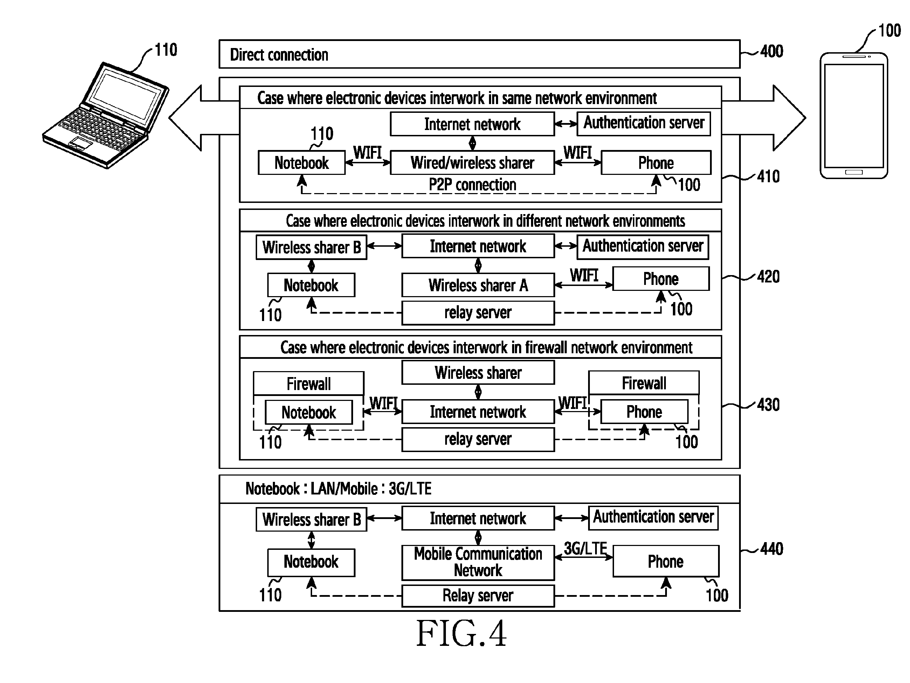

The network connection between the first electronic device 110 and the second electronic device 100 can be made through various network connection schemes as illustrated in FIGs. 3 and 4. According to the network connection schemes, the term "mirroring" can be interchangeable with "Wi-Fi display" or "mirroring AirPlay".

According to various embodiments of the present disclosure, an initial network connection method (or network channel) between the first electronic device 110 and the second electronic device 100 can be determined according to a predefined process. For example, the initial network connection method can include the currently fastest connection method, for example, a method of making a connection through a currently activated network or a method of making a connection through a network having a high priority.

One of the first electronic device 110, the second electronic device 100, and a server that relays a connection between the first electronic device 110 and the second electronic device 100 can identify whether the capability of a current network connection meets a threshold. For example, through the current network connection, it can be identified whether the second electronic device 100 can transmit 30 frames per second to the first electronic device 100. When the capability is not satisfactory, a network connection that meets the capability can be selected from other various network connections and switching to the selected network connection can be made.

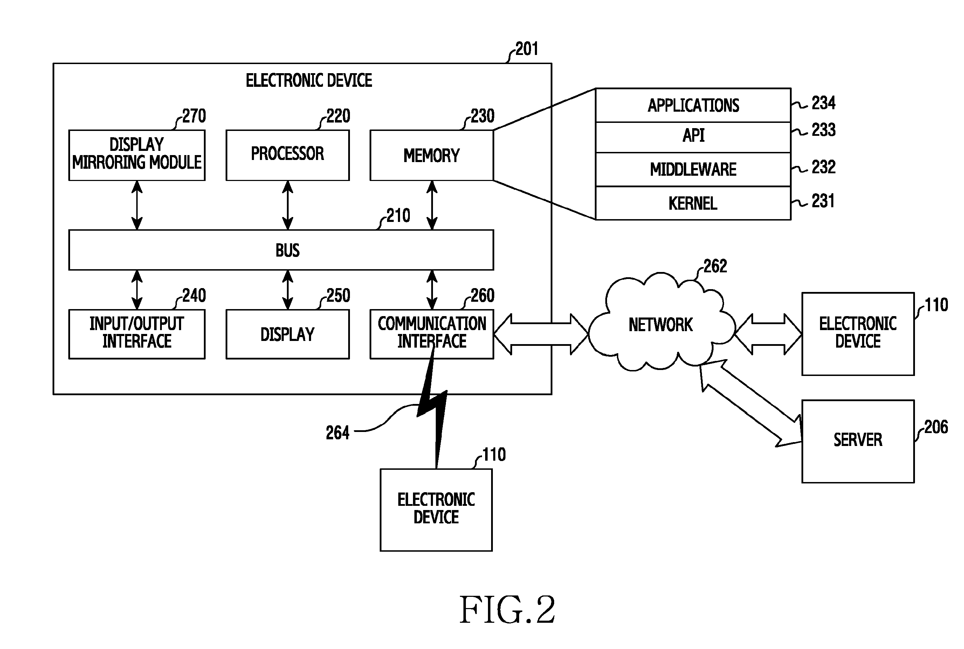

FIG. 2 illustrates a network environment including an electronic device according to various embodiments of the present disclosure. Referring to FIG. 2, the electronic device 100 can include a bus 210, a processor 220, a memory 230, an input/output interface 240, a display 250, a communication interface 260, and a display mirroring module 270.

The bus 210 can be a circuit that connects the aforementioned components to each other and transmits communication signals (for example, control messages) between the aforementioned components.

For example, the processor 220 can receive instructions from the aforementioned other components (for example, the memory 230, the input/output interface 240, the display 250, the communication interface 260, or the display mirroring module 270) through the bus 210, decipher the received instructions, and perform calculations or data processing according to the deciphered instructions.

The memory 230 can store instructions or data received from or created by the processor 220 or the other components (for example, the input/output interface 240, the display 250, the communication interface 260, and the display mirroring module 270). The memory 230 can include programming modules, for example, a kernel 231, middleware 232, an Application Programming Interface (API) 233, and applications 234. Each of the aforementioned programming modules can be formed of software, firmware, hardware, or a combination of at least two thereof.

The kernel 231 can control or manage system resources (for example, the bus 210, the processor 220, or the memory 230) used for executing an operation or a function implemented in the remaining other programming modules, for example, the middleware 232, the API 233, or the applications 234. In addition, the kernel 231 can provide an interface through which the middleware 232, the API 233, or the applications 234 can control or manage the individual components of the electronic device 100 while accessing the individual components.

The middleware 232 can serve as an intermediary that allows the API 233 or the applications 234 to communicate with the kernel 231, so as to exchange data. Furthermore, with regard to task requests received from the applications 234, the middleware 232 can perform a control (for example, scheduling or load balancing) for the task requests using, for example, a method of assigning a priority for first using the system resources (for example, the bus 210, the processor 220, and the memory 230) of the electronic device 100 to at least one of the applications 234.

The API 233 is an interface through which the applications 234 can control functions provided by the kernel 231 and the middleware 232, and can include at least one interface or function (for example, instruction) for file control, window control, image processing, or text control.

According to the various embodiments, the applications 234 can include a Short Message Service (SMS)/Multimedia Message Service (MMS) application, an e-mail application, a calendar application, an alarm application, a health care application (for example, an application for measuring a work rate or a blood sugar), an environment information application (for example, an application for providing atmospheric pressure, humidity, or temperature information). Additionally or alternatively, the application 234 can be an application related to an information exchange between the electronic device 100 and an external electronic device (for example, an electronic device 100 or an electronic device 201), The application related to the information exchange can include, for example, a notification relay application for transmitting specific information to the external electronic device, or a device management application for managing the external electronic device.

For example, the notification relay application can include a function of transferring, to the external electronic device (for example, the electronic device 100 or the electronic device 201), notification information generated from other applications of the electronic device 100 (for example, an SMS/MMS application, an e-mail application, a health management application, an environmental information application, and the like). Additionally or alternatively, the notification relay application can receive the notification information from, for example, the external electronic device (for example, the electronic device 110), and can provide the received notification information to a user. The device management application can manage (for example, install, delete, or update), for example, at least some functions (for example, a function of turning on/off an external electronic device (or some components thereof) or a function of adjusting the brightness (or resolution) of a display) of the external electronic device (for example, the electronic device 110) that communicates with the electronic device 100, applications executed in the external electronic device, or services (for example, a phone call service or a message service) provided by the external electronic device.

According to various embodiments, the applications 234 can include an application set on the basis of an attribute (for example, type of electronic device) of the external electronic device (for example, the electronic device 110). For example, when the external electronic device is an MP3 player, the applications 234 can include an application related to the reproduction of music. Similarly, when the external electronic device is a mobile medical appliance, the applications 234 can include an application related to health care. According to an embodiment, the applications 234 can include at least one of an application designated to the electronic device 100 and an application received from the external electronic device (for example, a server 206 or the electronic device 110).

Through a sensor (for example, an acceleration sensor or a gyro sensor) or an input device (for example, a keyboard or a touch screen), the input/output interface 240 can transfer instructions or data input by the user to the processor 220, the memory 230, the communication interface 260, or the display mirroring module 270 through, for example, the bus 210. For example, the input/output interface 240 can provide the processor 220 with data for a user's touch input through the touch screen. Furthermore, through an output device (for example, a speaker or a display), the input/output interface 240 can output instructions or data received from the processor 220, the memory 230, the communication interface 260, or the display mirroring module 270 through the bus 210. For example, the input/output interface 240 can output voice data, which is processed through the processor 220, to a user through a speaker.

The display 250 can display various pieces of information (for example, multimedia data or text data) for the user.

The communication interface 260 can connect communication between the electronic device 100 and the external electronic device (for example, the electronic device 110 or the server 206). For example, the communication interface 260 can support network communication 262 (for example, Internet, Local Area Network (LAN), Wide Area Network (WAN), telecommunication network, cellular network, satellite network, or Plain Old Telephone Service (POTS)), short-range communication 264 (for example, WiFi, BlueTooth (BT), or Near Field Communication (NFC)), or wired communication (for example, Universal Serial Bus (USB), High Definition Multimedia Interface (HDMI), Recommended Standard (RS)-232, or POTS). According to an embodiment, a protocol (for example, a short-range communication protocol, a network communication protocol, or a wired communication protocol) for communication between the electronic device 100 and the external device can be supported by at least one of the API 233 and the middleware 232. Each of the electronic devices 110 can be a device which is the same as the electronic device 100 (for example, the same type device) or another device that is different from the electronic device 100 (for example, a different type device).

According to various embodiments, the electronic device 100 and the electronic device 110 can be directly connected to each other through BT, NFC, a USB cable, an HDMI cable, or an RS-232 cable as indicated by reference numeral 264 or can be connected to each other through a network 262.

The display mirroring module 270 can process at least some pieces of information acquired from the other components (for example, the processor 220, the memory 230, the input/output interface 240, or the communication interface 260), and can provide the processed information to a user through various methods. For example, the display mirroring module 270 can control at least some functions of the electronic device 100 by using the processor 220 or independently from the processor 220 such that the electronic device 100 interworks with another electronic device (for example, the electronic device 110 or the server 206). The display mirroring module 270 can be formed of software, hardware, or a combination thereof. Further, when the display mirroring module 270 is implemented by hardware, the display mirroring module 270 can be implemented by separate hardware or included in the processor 220.

An electronic device according to various embodiments of the present disclosure, for example, additional information on the first electronic device 110 and/or the second electronic device 100 can be provided through FIGS. 3 to 9 below.

FIG. 3 illustrates a scenario of a network connection between a desktop computer and a portable electronic device according to various embodiments of the present disclosure.

Referring to FIG. 3, the first electronic device 110, such as a desktop computer, and the second electronic device 100, such as a smart phone, can be connected through a USB cable as indicated by reference numeral 300. Although not illustrated, according to various embodiments, the first electronic device 110 and the second electronic device 100 can be directly connected through a short-range wireless communication scheme (for example, WiFi direct^{®}, Bluetooth^{®}, or P2P communication using mobile communication) instead of the USB cable.

According to various embodiments, in an environment (for example, in the same network environment) 310 where the first electronic device 110 is connected to a wired/wireless sharer through a wired LAN and the second electronic device 100 is connected to the wired/wireless sharer through a wireless LAN, the first electronic device 110 can make a request for a mirroring service to an authentication server and the authentication server can notify the second electronic device 100 of the existence of the request for the mirroring service in response to the request. Further, a notification method can include a push type. The wired/wireless sharer and the authentication server can be connected to an Internet network. In such an environment 310, the first electronic device 110 and the second electronic device 100 can perform a connection service through the wired/wireless sharer as indicated by reference numeral 310. The authentication server can also transmit an output image of the first electronic device 110 or an output image of the second electronic device 100 to the counterpart electronic device thereof after an authentication process. According to various embodiments, when the authentication server allows a connection between the first electronic device 110 and the second electronic device 100 through the authentication process and provides a result thereof to a separate server (not shown) connected to the Internet network, the output image of the first electronic device 110, or the output image of the second electronic device 100, can be transmitted to the counterpart electronic device through the separate server. According to various embodiments, in an environment (for example, in a different network environment) 320 where the first electronic device 110 is connected to an Internet network through a wired LAN and the second electronic device 100 is connected to the Internet network through a wireless sharer, the first electronic device 110 can make a request for a connection service to an authentication server and the authentication server can notify the second electronic device 100 of the existence of the request for the connection service in response to the request. Both the wired/wireless sharer and the authentication server can be connected through the Internet network. In such an environment 320, the first electronic device 110 and the second electronic device 100 can perform the connection service through the authentication server or a separate server (not shown) connected to the Internet network, or can perform the connection service through a relay server as indicated by reference numeral 320. The relay server can be a Software enabled Access Point (SoftAP) or a mobile AP corresponding to software that turns a wireless client into an AP (for example, a tethering function or a mobile hotspot function). The relay server can be a third electronic device, the first electronic device 110, or the second electronic device 100.

According to various embodiments, in an environment 330 where the first electronic device 110 is connected to the Internet network via a firewall through a wired LAN, the second electronic device 100 is connected to the Internet network via a firewall through a wireless LAN, and the authentication server is connected to the Internet network (hereinafter, in a state where the first electronic device 110 and the second electronic device 100 interwork with each other in a firewall network environment), the first electronic device 110 can make a request for a connection service to the authentication server and the authentication server can notify the second electronic device of the existence of the request for the connection service in response to the request. In such an environment 330, the first electronic device 110 and the second electronic device 100 can perform the connection service through the authentication server or a separate server (not shown) connected to the Internet network or can perform the connection service through a relay server as indicated by reference numeral 320. The relay server can be a SoftAP or a mobile AP corresponding to software that turns a wireless client into an AP (for example, a tethering function or a mobile hotspot function). The relay server can be a third electronic device, the first electronic device 110, or the second electronic device 100.

According to various embodiments, in an environment 340 where the first electronic device 110 is connected to the Internet network through the wired LAN, the second electronic device 100 is connected to the Internet network through a mobile communication network (for example, a 3G/LTE network), and the authentication server is connected to the Internet network, the first electronic device 110 can make a request for a connection service to the authentication server and the authentication server can notify the second electronic device 100 of the existence of the request for the connection service through a push in response to the request. In such an environment 340, the first electronic device 110 and the second electronic device 100 can perform the connection service through the authentication server or a separate server (not shown) connected to the Internet network or can perform the connection service through a relay server as indicated by reference numeral 320. The relay server can be a SoftAP or a mobile AP corresponding to software that turns a wireless client into an AP (for example, a tethering function or a mobile hotspot function). The relay server can be a third electronic device, the first electronic device 110, or the second electronic device 100.

According to various embodiments, when the connection service is performed through P2P communication or the relay server (for example, SoftAP or mobile AP) (for example, in a network environment where the authentication server connected to the Internet network is not used), the first electronic device 110 can serve as a server and the second electronic device 100 can serve as a client, so as to perform an authentication process of the connection service. Alternatively, the first electronic device 110 can serve as the client and the second electronic device 100 can serve as the server, so as to perform the authentication process of the connection service.

The electronic device can include a processor that receives an output image of the second electronic device from the second electronic device through a first network connection, determines whether the capability of the first network connection meets a predetermined threshold, and switches the first network connection to a second network connection and make a control to receive data of the second electronic device from the second electronic device when the capability of the first network connection does not meet the predetermined threshold.

The processor can transmit available network resource information of the first electronic device to the server and receive information for the second network connection from the server in order to switch to the second network connection, and make a control to attempt the second network connection by using the information. The processor can activate a communication function scheme corresponding to the second network connection based on the information. The processor can provide connection information to the first electronic device based on the information.

The connection information can include at least one of a name of the AP and a password.

The processor can transmit an output image of the second electronic device to the first electronic device through the first network connection. When the capability of the first network connection does not meet a predetermined capability threshold, the processor can switch the first network connection to a second network connection that meets the predetermined capability threshold and make a control to transmit the output image of the second electronic device to the first electronic device.

The processor can transmit available network resource information of the second electronic device to the server and receive information for the second network connection from the server in order to switch to the second network connection, and make a control to attempt the second network connection by using the guide information.

An apparatus of a server can include a processor for receiving first network resource information from a first electronic device when the capability of a first network connection does not meet a predetermined capability threshold during a screen sharing service between the first electronic device and a second electronic device through the first network connection, receiving available second network resource information from the second electronic device, determining a second network connection that meets the predetermined threshold based on the available first network resource information and the available second network resource information, and making a control to provide network connection information corresponding to the determined second network connection to each of the first electronic device and the second electronic device.

The processor can make a request for available second network resource information to the second electronic device.

The processor can receive connection information from the first electronic device and transmit the connection information to the second electronic device.

FIG. 4 illustrates a scenario of a network connection between a notebook and a portable electronic device according to various embodiments of the present disclosure.

Referring to FIG. 4, the first electronic device 110, such as a notebook, and the second electronic device 100, such as a smart phone, can be connected through a USB cable as indicated by reference numeral 400. According to various embodiments, the first electronic device 110 and the second electronic device 100 can be directly connected through a short-range wireless communication scheme (for example, WiFi direct, Bluetooth, or P2P communication using mobile communication) instead of the USB cable.

According to various embodiments, in an environment (for example, in the same network environment) 410 where the first electronic device 110 and the second electronic device 100 are connected to the same wired/wireless sharer, the first electronic device 110 can make a request for a connection service to an authentication server and the authentication server can notify the second electronic device 100 of the existence of the request for the mirroring service in response to the request. Further, a notification method can include a push type. The wired/wireless sharer and the authentication server can be connected to an Internet network. In such an environment 410, the first electronic device 110 and the second electronic device 100 can perform the connection service through the wired/wireless sharer or through P2P communication.

According to various embodiments, in an environment (for example, in a different network environment) 420 where the first electronic device 110 is connected to an Internet network through a wireless sharer B and the second electronic device 100 is connected to the Internet network through a wireless sharer A, the first electronic device 110 can make a request for a connection service to the authentication server, and the authentication server can notify the second electronic device 100 of the existence of the request for the connection service in response to the request. Both the wireless sharer and the authentication server can be connected through the Internet network. In such an environment 420, the first electronic device 110 and the second electronic device 100 can perform the connection service through the Internet network or through a relay server. The relay server can be a SoftAP (for example, a tethering function or a mobile hotspot function), which is a wireless client but serves as an access point or a separate server which is connected to the Internet network.

According to various embodiments, in an environment 430 where the first electronic device 110 is connected to the Internet network via a firewall through a wired LAN, the second electronic device 100 is connected to the Internet network via a firewall through a wireless LAN, and the authentication server is connected to the Internet network (hereinafter, in a state where the first electronic device 110 and the second electronic device 100 interwork with each other in a firewall network environment), the first electronic device 110 can make a request for a connection service to the authentication server and the authentication server can notify the second electronic device of the existence of the request for the connection service in response to the request. In such an environment 430, the first electronic device 110 and the second electronic device 100 can perform the connection service through the Internet network or through a relay server. The relay server can be a SoftAP (for example, a tethering function or a mobile hotspot function), which is a wireless client but serves as an access point or a separate server which is connected to the Internet network.

According to various embodiments, in an environment where the first electronic device 110 is connected to the Internet network through the wireless LAN, the second electronic device 100 is connected to the Internet network through a mobile communication network (for example, a 3G/LTE network), and the authentication server is connected to the Internet network, the first electronic device 110 can make a request for a connection service to the authentication server and the authentication server can notify the second electronic device 100 of the existence of the request for the mirroring service in response to the request. In such an environment 440, the first electronic device 110 and the second electronic device 100 can perform the connection service through the Internet network or through a relay server. The relay server can be a SoftAP (for example, a tethering function or a mobile hotspot function), which is a wireless client but serves as an access point or a separate server which is connected to the Internet network.

According to various embodiments, when the connection service is performed through P2P communication or the relay server (for example, SoftAP or mobile AP), the first electronic device 110 can serve as a server and the second electronic device 100 can serve as a client, so as to perform an authentication process of the connection service. Alternatively, the first electronic device 110 can serve as the client and the second electronic device 100 can serve as the server, so as to perform the authentication process of the connection service.

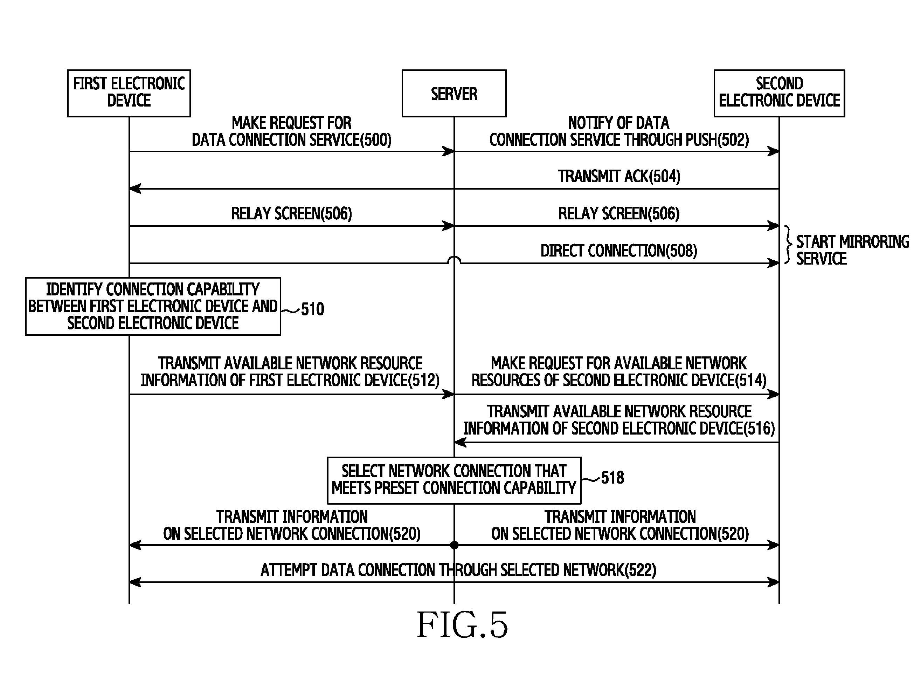

FIG. 5 is a signal flow diagram for sharing a screen between two electronic devices according to various embodiments of the present disclosure.

Referring to FIG. 5, the first electronic device can make a request for a mirroring service with the second electronic device to a server (for example, the authentication server of FIG. 3 or 4) in step 500. For example, the first electronic device can access a webpage that provides the corresponding connection service to log in the webpage through a user ID/password. According to various embodiments, the server corresponds to a server in which the authentication server and the relay server of FIGS. 3 and 4 are combined.

When the first electronic device makes a request for a connection service with the second electronic device, the server can notify the second electronic device of the existence of the request for the connection service by the first electronic device in step 502.

The second electronic device can inform that the connection service is prepared in response to the request for the mirroring service by the first electronic device (for example, by transmitting an ACK) in step 504.

The first electronic device can provide an image output on the screen thereof to the server, and the server can transmit the image output on the screen of the first electronic device to the second electronic device in step 506.

According to various embodiments, the first electronic device can provide an image output on the screen thereof to the server, and the server can transmit the image output on the screen of the first electronic device to the second electronic device in step 506.

According to various embodiments, when the first electronic device and the second electronic device are directly connected in the same network environment (scenarios 310 and 410) (for example, when the first electronic device and the second electronic device are connected to the same sharer through P2P communication), the output image of the first electronic device or the output image of the second electronic device can be directly transmitted to the counterpart electronic device thereof without passing through the server in step 508.

The output image of the first electronic device or the output image of the second electronic device can be transmitted to the counterpart electronic device through the server based on operations 500, 502, 504, and 506 or directly transmitted to the counterpart electronic device based on operations 500, 502, 504, and 508.

The first electronic device can identify the capability of a network connection between the first electronic device and the second electronic device in step 510. For example, the first electronic device can identify whether the first electronic device can receive the predetermined number of frames of the output image of the second electronic device per second (for example, 30 frames per second) or whether the first electronic device can transmit the predetermined number of frames of the output image of the first electronic device to the second electronic device.

According to various embodiments, the second electronic device or the server can perform operation 510 for identifying the capability of the network connection between the first electronic device and the second electronic device.

When the first electronic device can receive the predetermined number of output image frames from the second electronic device or transmit the predetermined number of output image frames to the second electronic device, the current network connection can be maintained (not shown).

According to various embodiments, when the first electronic device cannot receive the predetermined number of frames of the output image from the second electronic device, or cannot transmit the predetermined number of frames of the output image to the second electronic device, the first electronic device can provide available network resource information or available network connection information to the server in step 512.

In response to the available network resource information of the first electronic device, the server can make a request for available network resources to the second electronic device in step 514 and can receive the available network resources from the second electronic device in step 516.

The server can select a network connection that meets a predetermined network connection capability by using the available network resource information of the first electronic device and the available network resource information of the second electronic device in step 518.

According to various embodiments of the present disclosure, a method of identifying whether the corresponding network connection meets the predetermined network connection capability can be implemented in various ways and is not limited to a particular type.

The server can transmit information on the selected network connection to the first electronic device or the second electronic device in step 520. The information on the selected network connection can be network connection guide information for the first electronic device or the second electronic device.

The first electronic device and the second electronic device can switch the existing network connection to the selected network connection, so as to attempt the mirroring service in step 522.

For example, when the second electronic device and the first electronic device are initially connected through a USB cable, WiFi, or mobile communication for the mirroring service, the network connection capability can be identified. For example, in the output below 30 frames per second, when each of the first electronic device and the second electronic device determines available network resources and transmits the available network resources to the server, if there is a network connection better than the current network connection (for example, SoftAP or mobile AP → direction connection), the server can switch the network connection through a process in which one of the first electronic device and the second electronic device serves as the server and the other electronic device serves as the client. Then, the electronic device serving as the server can transmit an access ID and password to the electronic device serving as the client, and thus the electronic device serving as the client can automatically access the electronic device serving as the server.

The SoftAP can transmit an output signal to the first electronic device by using identification information of the first electronic device included in the output signal from the connected second electronic device or transmit the output signal to the first electronic device according to a control signal indicating that the output signal will be transmitted to the first electronic device.

According to various embodiments, the server can transmit connection guide information to the electronic device, and the electronic device can attempt a connection with a counterpart electronic device based on the connection guide information. For example, when the first electronic device serves as a server and the second electronic device serves as a client, if the first electronic device can perform a WiFi communication function, the first electronic device can be automatically set to operate as the SoftAP and transmit its own AP name and password to the second electronic device, so as to allow the second electronic device to automatically access the first electronic device.

When the WiFi communication function of the second electronic device is turned off or inactivated, the first electronic device can automatically turn on or activate the WiFi communication function, so that the received AP of the first electronic device can be searched for and the connection is made through an automatic input of the password.

According to various embodiments, although a better network resource can be found after an initial network connection, once the server determines that there is the first electronic device and the second electronic device within a predetermined range (for example, position estimation based on IP or Bluetooth Low Energy (BLE), one electronic device can serve as the server to allow the other electronic device to perform a direct connection.

According to various embodiments, the direct connection can be determined based on positions of the two electronic devices, but can be determined using history information in which previous connections are recorded and identification information of the electronic device. For example, the direct connection can be determined from the history information based on the network connection, which the corresponding electronic device previously had.

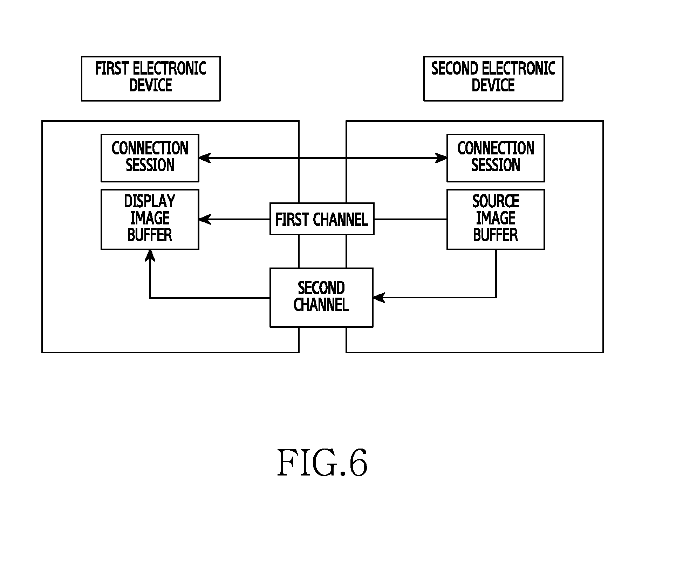

FIG. 6 illustrates an example of a network channel change for sharing a screen between two electronic devices according to various embodiments of the present disclosure.

Referring to FIG. 6, since an initial network connection (for example, a first channel) for a connection service between the first electronic device 110 and the second electronic device 100 is configured, output image data of the second electronic can be transmitted to the first electronic device through the first channel.

When the second electronic device can identify that the connected first channel does not meet a network capability to provide available network resource information to a server (for example, operations 510 and 512 of FIG. 5) and the server determines a new network channel (for example, a second channel) that meets the network capability by using available network resource information of the first and second electronic devices (for example, operation 518 of FIG. 5), output image data of the second electronic device can be transmitted to the first electronic device through the second channel (for example, operation 522 of FIG. 5).

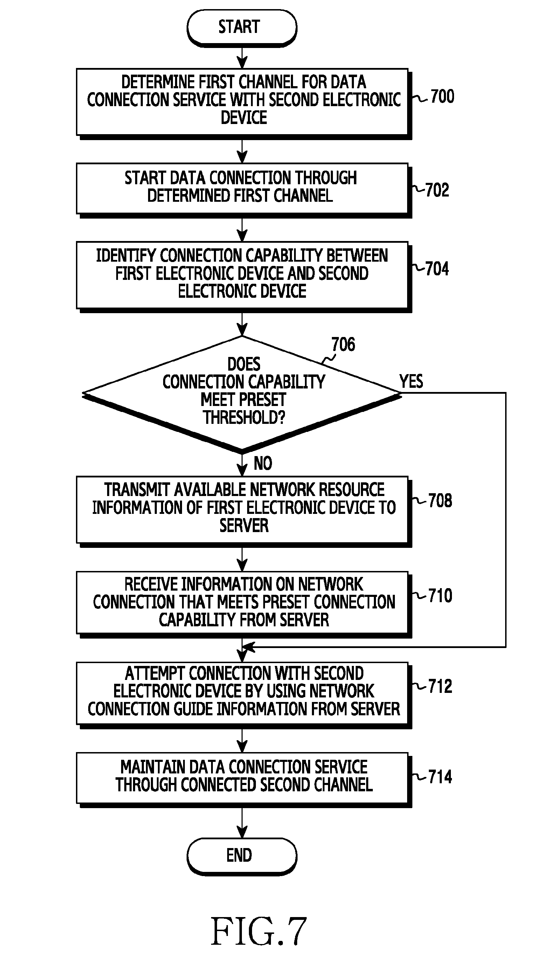

FIG. 7 is a flowchart illustrating an operation of the first electronic device that makes a request for a screen sharing service according to various embodiments of the present disclosure.

Referring to FIG. 7, the first electronic device can determine a first network channel for a connection service with the second electronic device in operation 700. For example, the first electronic device can log in an authentication server for the connection service to make a request for the connection service and can receive an ACK of the request for the connection service from the second electronic device through the server to determine the first network channel.

The first electronic device can start the connection service through the first network channel for the connection service with the second electronic device in operation 702.

The first electronic device can identify the capability of the network connection between the first electronic device and the second electronic device in operation 704. For example, the first electronic device can identify whether the first electronic device can receive or transmit image data of 30 frames per second from or to the second electronic device through the first network channel.

When the capability of the network connection meets a predetermined capability threshold in operation 706, the first electronic device can perform operations 702 to 704. When the capability of the network connection does not meet the predetermined capability threshold, the first electronic device can perform operations 708 to 714.

The first electronic device can transmit available network resource information of the first electronic device to the server in operation 708 and receive guide information of the network connection that meets the predetermined capability of the network connection from the server in operation 710.

The first electronic device can attempt the connection with the second electronic device by using the network connection guide information received from the server in operation 712 and maintain a mirroring service through the connected second network channel in operation 714.

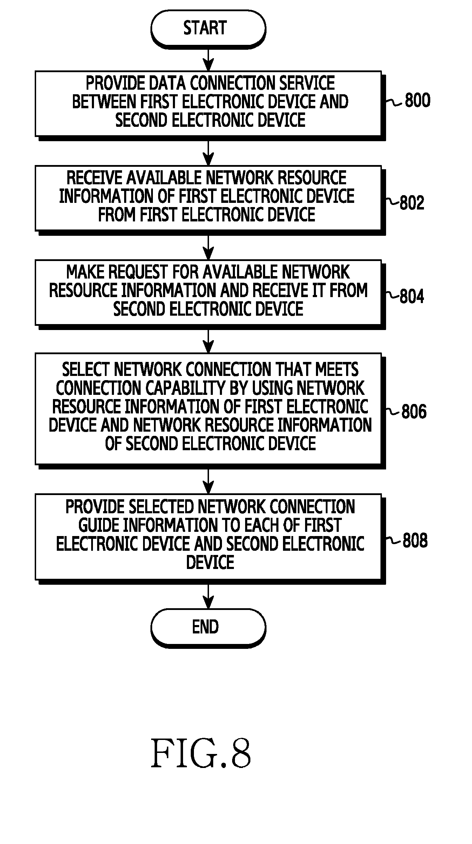

FIG. 8 is a flowchart illustrating an operation of a server for supporting screen sharing between two electronic devices according to various embodiments of the present disclosure.

Referring to FIG. 8, the server can receive an output image from the second electronic device through a network connection for a connection service between the first electronic device and the second electronic device, and transmit the output image of the second electronic device to the first electronic device in operation 800.

The server can receive available network resource information of the first electronic device from the first electronic device in operation 802, and can make a request for available network resource information to the second electronic device and receive the available network resource information of the second electronic device in operation 804.

The server can select a network connection that meets a predetermined network connection capability by using the available network resource information of the first electronic device and the available network resource information of the second electronic device in step 806.

The server can provide information on the selected network connection to each of the first electronic device and the second electronic device in operation 808. According to various embodiments, when the first electronic device serves as a server (for example, SoftAP) and the second electronic device serves as a client based on the selected network connection, the second electronic device can receive additional information (for example, an ID and a password) required for accessing the first electronic device from the first electronic device and transmit the received additional information to the second electronic device.

According to various embodiments, the operation for identifying the capability of the network connection between the first electronic device and the second electronic device (for example, operation 510 of FIG. 5 or operations 704 and 706 of FIG. 7) can be performed by the server.

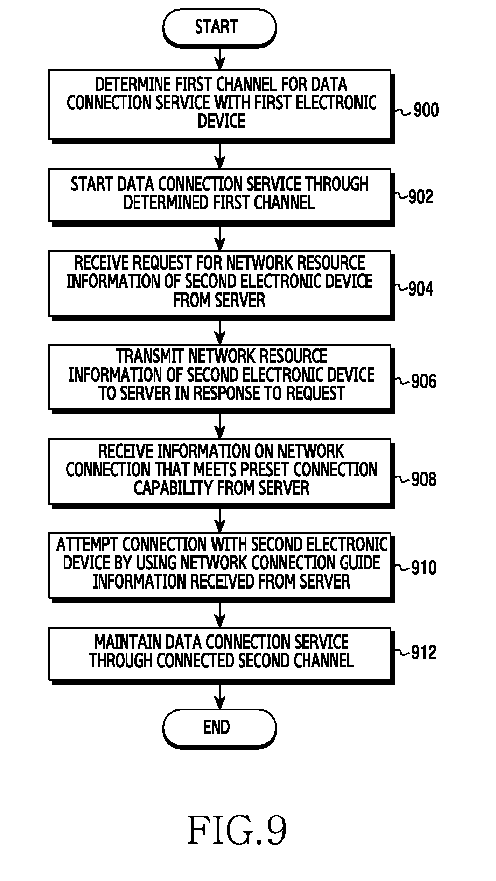

FIG. 9 is a flowchart illustrating an operation of the second electronic device that receives a request for a screen sharing service according to various embodiments of the present disclosure.

Referring to FIG. 9, the second electronic device can determine a first network channel for a mirroring service with the first electronic device through the server in operation 900, and can start a connection service by using the determined first network channel in operation 902.

When the capability of the first network channel does not meet a threshold, the second electronic device can receive a request for available network resource information of the second electronic device from the server in operation 904, and can transmit the available network resource information to the server in response to the request in operation 906.

The second electronic device can receive information on a network connection that meets the predetermined network connection capability from the server in operation 908, attempt a connection with the first electronic device by using the information on the network connection in operation 910, and maintain the mirroring service through a connected second network channel in operation 912.

According to various embodiments, the operation for identifying the capability of the network connection between the first electronic device and the second electronic device (for example, operation 510 of FIG. 5 or operations 704 and 706 of FIG. 7) is not limited to the operation of the first electronic device or the server and can be performed by the second electronic device.

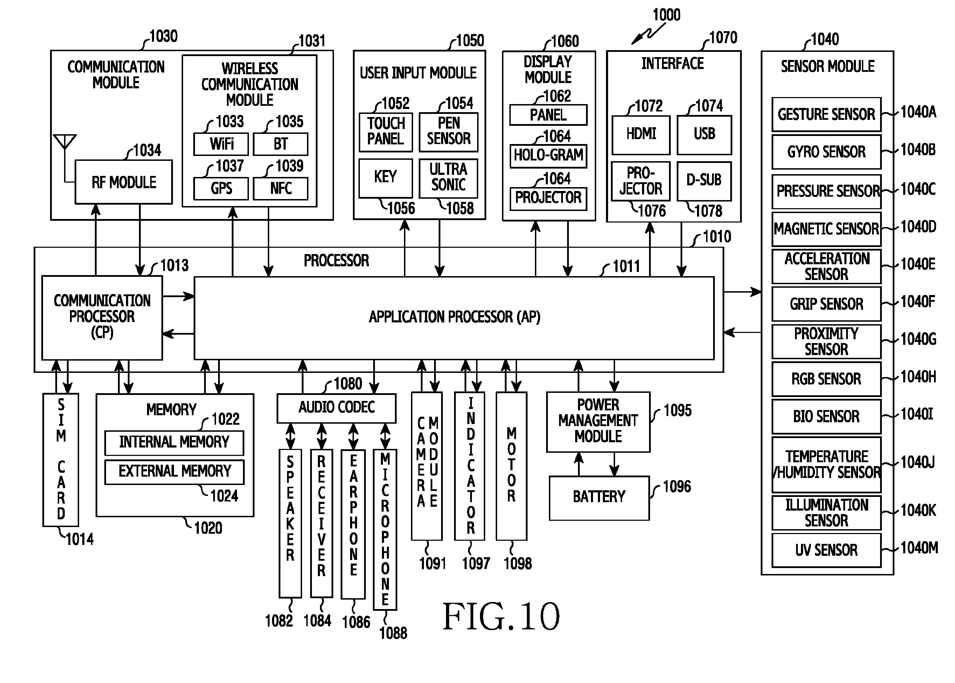

FIG. 10 is a block diagram of an electronic device according to various embodiments of the present disclosure. The electronic device 1000 can be, for example, the electronic device 201 illustrated in FIG. 2. Referring to FIG. 10, the electronic device 1000 include one or more processors 1010, a Subscriber Identification Module (SIM) card 1014, a memory 1020, a communication module 1030, a sensor module 1040, a user input module 1050, a display module 1060, an interface 1070, an audio codec 10100, a camera module 1091, a power management module 1095, a battery 1096, an indicator 1097, and a motor 1098.

The processor 1010 (e.g., the processor 220) can include one or more Application Processors (APs) 1011 or one or more Communication Processors (CPs) 1013. The processor 1010 can be, for example, the processor 220 illustrated in FIG. 2. Although FIG. 10 illustrates that the AP 1011 and the CP 1013 are included within the processor 1010, the AP 1011 and the CP 1013 can be included within different IC packages, respectively. In one example, the AP 1011 and the CP 1013 can be included within one IC package.

The AP 1011 can drive an operating system or an application program and control a plurality of hardware or software elements connected to the AP 1011, and perform processing and operation of various data including multimedia data. The AP 1011 can be, for example, implemented as a System on Chip (SoC). In another example, the processor 1010 can further include a Graphic Processing Unit (GPU) (not shown).

The CP 1013 can perform a function of managing a data link and converting a communication protocol in communication between an electronic device (e.g., the electronic device 200) including the electronic device 1000 and other electronic devices connected through a network. The CP 1013 can be implemented as a SoC, for example. In a further example, the CP 1013 can perform at least part of a multimedia control function. The CP 1013 can, for example, perform the distinction and authentication of the electronic device within a communication network, using a subscriber identity module (e.g., the SIM card 1014). Also, the CP 1013 can provide services such as voice telephony, video telephony, a text message, packet data or the like to a user.

Also, the CP 1013 can control data transmission/reception of the communication module 1030. Although FIG. 10 illustrates the elements such as the CP 1013, the power management module 1095, the memory 1020 and the like as elements separate from the AP 1011, In one example, the AP 1011 can be implemented to include at least some (e.g., the CP 1013) of the aforementioned elements.

In a further example, the AP 1011 or the CP 1013 can load to a volatile memory an instruction or data received from a non-volatile memory connected to each of the AP 1011 and the CP 1013 or from at least one of other elements, and process the loaded instruction or data. Also, the AP 1011 or the CP 1013 can store in the non-volatile memory data received from at least one of the other elements or generated by at least one of the other elements.

The SIM card 1014 can be a card implementing the subscriber identity module, and can be inserted into a slot provided in a specific location of the electronic device. The SIM card 1014 can include unique identification information (e.g., Integrated Circuit Card ID (ICCID)) or subscriber information (e.g., International Mobile Subscriber Identity (IMSI)).

The memory 1020 can include an internal memory 1022 or an external memory 1024. The memory 1020 can be, for example, the memory 230 illustrated in FIG. 2. The internal memory 1022 can include, for example, at least one of a volatile memory (e.g., a Dynamic Random Access Memory (DRAM), a Static Random Access Memory (SRAM), a Synchronous Dynamic Random Access Memory (SDRAM) and the like) or a non-volatile memory (e.g., a One Time PROM (OTPROM), a Programmable ROM (PROM), an Erasable Programmable ROM (EPROM), an Electrically Erasable Programmable ROM (EEPROM), a mask Read Only Memory (ROM), a flash ROM, a Not AND (NAND) flash memory, a Not OR (NOR) flash memory and the like). In one example, the internal memory 1022 can take a form of Solid State Drive (SSD). The external memory 1024 can further include a flash drive, for example, Compact Flash (CF), Secure Digital (SD), Micro Secure Digital (Micro-SD), Mini Secure Digital (Mini-SD), extreme Digital (xD), a memory stick or the like.

The communication module 1030 can include a wireless communication module 1031 or a Radio Frequency (RF) module 1034. The communication module 1030 can be, for example, the communication interface 260 illustrated in FIG. 2. The wireless communication module 1031 can include, for example, WiFi 1033, BT 1035, GPS 1037, and NFC 1039. For example, the wireless communication module 1031 can provide a wireless communication function using radio frequency. Alternatively, the wireless communication module 1031 can include a network interface (e.g., a LAN card), a modem or the like for connecting the electronic device 1000 with a network (e.g., the Internet, a LAN, a WAN, a telecommunication network, a cellular network, a satellite network, a POTS or the like).

The RF module 1034 can take charge of transmission/reception of data, for example, transmission/reception of an RF signal or a called electronic signal. The RF module 1034 can include, though not illustrated, for example, a transceiver, a Power Amp Module (PAM), a frequency filter, a Low Noise Amplifier (LNA) and the like. Also, the RF module 1034 can further include a component for transmitting/receiving an electromagnetic wave on a free space in a wireless communication, for example, a conductor, a conductive line and the like.

The sensor module 1040 can include, for example, at least one of a gesture sensor 1040A, a gyro sensor 1040B, an air pressure sensor 1040C, a magnetic sensor 1040D, an acceleration sensor 1040E, a grip sensor 1040F, a proximity sensor 1040G, a Red, Green, Blue (RGB) sensor 1040H, a biological sensor 1040I, a temperature/humidity sensor 1040J, a light sensor 1040K, and a Ultraviolet (UV) sensor 1040M. The sensor module 1040 can measure a physical quantity or sense an activation state of the electronic device and convert the measured or sensed information into an electrical signal. Alternatively, the sensor module 1040 can include, for example, an Electronic nose (E-nose) sensor (not shown), an Electromyography (EMG) sensor (not shown), an Electroencephalogram (EEG) sensor (not shown), an Electrocardiogram (ECG) sensor (not shown), a fingerprint sensor (not shown) and the like. The sensor module 1040 can further include a control circuit for controlling at least one or more sensors provided therein.

The user input module 1050 can include a touch panel 1052, a (digital) pen sensor 1054, a key 1056, or an ultrasonic input device 1058. The user input module 1050 can be, for example, the input/output interface 240 illustrated in FIG. 2. The touch panel 1052 can recognize, for example, a touch input in at least one method among a capacitive method, a pressure sensitive method, an infrared method, and an ultrasonic method. Also, the touch panel 1052 can also further include a controller (not shown). In the capacitive method, not only direct touch but also proximity recognition is possible. The touch panel 1052 can also further include a tactile layer. In this instance, the touch panel 1052 can provide a tactile response to a user.

The (digital) pen sensor 1054 can be implemented, for example, using the same or similar method with receiving a user's touch input or a separate sheet for recognition. The key 1056 can be, for example, a keypad or a touch key. The ultrasonic input device 1058 is a device capable of confirming data by sensing a sound wave with a microphone (e.g., a microphone 1088) of the electronic device, and can perform wireless recognition through a pen generating an ultrasonic signal. In another example, the electronic device 1000 can also receive a user input from an external device (e.g., a network, a computer, or a server) connected to the electronic device 1000 using the communication module 1030.

The display module 1060 can include a panel 1062 or a hologram 1064. The display module 1060 can be, for example, the display 250 illustrated in FIG. 2. The panel 1062 can be, for example, a Liquid Crystal Display (LCD), an Active-Matrix Organic Light-Emitting Diode (AMOLED), or the like. The panel 1062 can be implemented to be flexible, transparent, or wearable, for example. The panel 1062 can be also constructed as one module together with the touch panel 1052. The hologram 1064 can show a three-dimensional image in the air by using interference of light. In one example, the display module 1060 can further include a control circuit for controlling the panel 1062 or the hologram 1064.

The interface 1070 can include, for example, a High-Definition Multimedia Interface (HDMI) 1072, a Universal Serial Bus (USB) 1074, a projector 1076, and a D-subminiature (D-sub) 1078. Alternatively, the interface 1070 can include, for example, Secure Digital / Multi Media Card (SD/MMC) (not shown) and Infrared Data Association (IrDA) (not shown).

The audio codec 1080 can convert a voice and an electric signal interactively. The audio codec 1080 can convert, for example, voice information that is inputted or outputted through a speaker 1082, a receiver 1084, an earphone 1086, the microphone 1088 and the like.

The camera module 1091 is a device capable of taking an image and a video. In a further example, the camera module 1091 can include one or more image sensors (e.g., a front lens and a rear lens), an Image Signal Processor (ISP) (not shown), and a flash LED (not shown).

The power management module 1095 can manage power of the electronic device 1000. Though not illustrated, the power management module 1095 can include, for example, a Power Management Integrated Circuit (PMIC), a charger Integrated Circuit (IC), and a battery gauge.

The PMIC can be mounted, for example, within an integrated circuit or a SoC semiconductor. A charging method can be divided into wired and wireless. The charger IC can charge a battery, and can prevent the inflow of overvoltage or overcurrent from an electric charger. In another example, the charger IC can include a charger IC for at least one of a wired charging method and a wireless charging method. As the wireless charging method, there are a magnetic resonance method, a magnetic induction method, an electromagnetic method and the like, for example. The charger IC can be added with additional circuits for wireless charging, for example, a coil loop, a resonance circuit, a rectifier circuit and the like.

The battery gauge can measure, for example, a level of the battery 1096, a voltage in charging, an electric current, and a temperature. The battery 1096 can generate electricity and supply a power source. The battery 1096 can be, for example, a rechargeable cell.

The indicator 1097 can display a specific state of the electronic device 1000 or a part (e.g., the AP 1011) thereof, for example, a booting state, a message state, a charging state and the like. The motor 1098 can convert an electrical signal into a mechanical vibration.

Though not illustrated, the electronic device 1000 can include a processing device (e.g., a GPU) for mobile TV support. The processing device for mobile TV support can process, for example, standard media data of Digital Multimedia Broadcasting (DMB), Digital Video Broadcasting (DVB), a media flow and the like. The aforementioned elements of the electronic device 1000 in accordance with the present disclosure can be constructed by one or more components, and the names of the corresponding elements can be varied in accordance with the kind of the electronic device. The electronic device 1000 in accordance with the present disclosure can include at least one of the aforementioned elements, and can omit some elements or further include additional other elements. Also, some of the elements of the electronic device 1000 in accordance with the present disclosure are coupled and constructed as one entity, thereby being able to identically perform the functions of the corresponding elements of before being coupled.

The term "module" used in the present disclosure can refer to, for example, a unit including one or more combinations of hardware, software, and firmware. The "module" can be interchangeably used with a term, such as unit, logic, logical block, component, or circuit. The "module" can be the smallest unit of an integrated component or a part thereof. The "module" can be the smallest unit that performs one or more functions or a part thereof. The "module" can be mechanically or electronically implemented. For example, the "module" according to the present disclosure can include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure can be implemented by a command stored in a computer-readable storage medium in a programming module form. When the command is executed by one or more processors (for example, the processor 220), the one or more processors can execute a function corresponding to the command. The computer-readable storage medium can be, for example, the memory 230. At least a part of the programming module can, for example, be implemented (e.g., executed) by the processor 220. At least a part of the programming module can, for example, include a module, a program, a routine, a set of instructions, or a process for performing at least one function.

The computer readable recording medium can include magnetic media such as a hard disc, a floppy disc, and a magnetic tape, optical media such as a compact disc read only memory (CD-ROM) and a digital versatile disc (DVD), magneto-optical media such as a floptical disk, and hardware devices specifically configured to store and execute program commands, such as a read only memory (ROM), a random access memory (RAM), and a flash memory. In addition, the program instructions can include high class language codes, which can be executed in a computer by using an interpreter, as well as machine codes made by a compiler. The aforementioned electronic device can be configured to operate as one or more software modules in order to perform the operation of the present disclosure, and vice versa.

The programming module according to the present disclosure can include one or more of the aforementioned components or can further include other additional components, or some of the aforementioned components can be omitted. Operations executed by a module, a programming module, or other component elements according to various embodiments of the present disclosure can be executed sequentially, in parallel, repeatedly, or in a heuristic manner. Further, some operations can be executed according to another order or can be omitted, or other operations may be added.

According to various embodiments, a storage medium storing commands is provided. The commands are configured to allow one or more processor to perform one or more operations when the commands are executed by the one or more processors. The one or more operations may include: determining a first network channel for a connection service with a second electronic device by a first electronic device; starting the connection service with the second electronic device through the first network channel for the mirroring service; identifying the capability of a network connection between the first electronic device and the second electronic device; when the capability of the network connection meets a predetermined threshold, maintaining the connection service through the first network channel; when the capability of the network connection does not meet the predetermined threshold, transmitting available network resource information of the first electronic device to a server; receiving information on a network connection that meets a predetermined network connection capability from the server; attempting a connection with the second electronic device by using information on the network connection received from the server; and maintaining the connection service through a connected second network channel.

According to various embodiments, the one or more operations may include: receiving data from the second electronic device through the network connection of the connection service between the first electronic device and the second electronic device and transmitting the data to the first electronic device by the server; receiving available network resource information of the first electronic device from the first electronic device; making a request for available network resource information to the second electronic device and receiving the network resource information of the second electronic device; selecting a network connection that meets a network connection capability by using the available network resource information of the first electronic device and the available network resource information of the second electronic device; and providing information on the selected network connection to each of the first electronic device and the second electronic device.

According to various embodiments, the one or more operations may include: determining a first network channel for a mirroring service with the first electronic device through the server by the second electronic device; starting a connection service by using the determined first network channel; when the capability of the first network channel is not satisfactory, receiving a request for network resource information of the second electronic device from the server; transmitting the network resource information to the server in response to the request; receiving information on a network connection that meets a predetermined network connection capability from the server; attempting a connection with the second electronic device by using the information on the network connection; and maintaining a mirroring service through a connected second network channel.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for communciating data, the method comprising:
receiving data from a second electronic device through a first network connection by a first electronic device;
determining whether a capability of the first network connection meets a predetermined capability threshold; and
in response to the determination, switching the first network connection to a second net work connection that meets the predetermined capability threshold and receiving the data of the s econd electronic device from the second electronic device.

2. The method of claim 1, wherein the switching of the first network connection to the second network connection comprises:
transmitting network resource information of the first electronic device to a server;
receiving information for connecting the second network from the server; and
attempting to connect the second network connection by using the received information.

3. The method of claim 2, further comprising activating a communication function scheme corresponding to a type of the second network based on the received information.

4. The method of claim 2, further comprising providing connection information to the first electronic device based on the received information.

5. The method of claim 4, wherein the connection information includes at least one of an access point name and a password.

6. The method of claim 1, further comprising:
transmitting the data of the second electronic device to the first electronic device through the first network connection by the second electronic device; and
when the capability of the first network connection does not meet the predetermined value, switching the first network connection to the second network connection that meets the predetermined value and transmitting the data of the second electronic device to the first electronic device.

7. The method of claim 6, wherein the switching the first network connection to the second network connection that meets the predetermined and transmitting the data to the first electronic device comprises:
transmitting available network resource information of the second electronic device to a server;
receiving guide information for the second network connection from the server; and
attempting the second network connection by using the guide information.

8. An electronic device comprising:
a tranceiver configured to establish a network connection;
a processor configured to:
receive an image data from the second electronic device through a first network connection;
determine whether the capability of the first network connection meets a predetermined capability threshold;
in response to the determination, switch the first network connection to a second network connection that meets the predetermined capability threshold; and
receive the data from the second electronic device throguh the second network connection.

9. The electronic device of claim 8, wherein, in order to switch the first network connection to the second network connection, the processor is further configured to:
transmit available network resource information of the first electronic device to a server,
receive information for the second network connection from the server, and
cause the tranceiver to attempt the second network connection by using the received information.

10. The electronic device of claim 9, wherein the processor is further configured to activate a communication function scheme corresponding to a type of the second network connection based on the received information.

11. The electronic device of claim 9, wherein the processor is configured to provide connection information to the first electronic device based on the information.

12. The electronic device of claim 9, wherein the connection information includes at least one of an AP name and a password.

13. The electronic device of claim 8, wherein the processor is further configured to:
transmit the image to the first electronic device through the first network connection by the second electronic device; and,
when the capability of the first network connection does not meet the predetermined capability threshold, switch the first network connection to the second network connection that meets the predetermined capability threshold, and transmit the image of the second electronic device to the first electronic device.

14. The electronic device of claim 13, wherein, in order to switch the first network connection to the second network connection, the processor is further configured to:
transmit available network resource information of the second electronic device to a server;
receive guide information for the second network connection from the server; and
attempt the second network connection by using the guide information.
